(19) **Europäisches Patentamt**
**European Patent Office**
**Office européen des brevets**

(11) **EP 4 509 813 A1**

(12) **EUROPÄISCHE PATENTANMELDUNG**

(43) Veröffentlichungstag:
**19.02.2025   Patentblatt 2025/08**

(21) Anmeldenummer: **24189222.3**

(22) Anmeldetag: **17.07.2024**

(51) Internationale Patentklassifikation (IPC):
**G01M 13/005** (2019.01)   **F16J 15/3296** (2016.01)
**G01N 19/02** (2006.01)   **F16J 15/34** (2006.01)

(52) Gemeinsame Patentklassifikation (CPC):
**G01M 13/005; F16J 15/3492; G01N 19/02**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **28.07.2023   DE 102023120204**

(71) Anmelder: **Herborner Pumpentechnik GmbH & Co KG**
**35745 Herborn (DE)**

(72) Erfinder:
• **KORUPP, Sascha**
**35614 Aßlar-Werdorf (DE)**
• **REEH, Nils**
**35745 Herborn (DE)**
• **ORTMÜLLER, Benjamin**
**35768 Siegbach (DE)**

(74) Vertreter: **Patentanwälte Olbricht Buchhold Keulertz**
**Partnerschaft mbB**
**Neue Mainzer Straße 75**
**60311 Frankfurt am Main (DE)**

(54) **SOFTSENSOR UND VERFAHREN ZUR BESTIMMUNG DER REIBLEISTUNG EINER GLEITRINGDICHTUNG DURCH SCHÄTZEN, UND PUMPE HIERMIT**

(57)     Die Erfindung betrifft einen Softsensor (20), insbesondere zur Bestimmung einer Reibleistung (L) einer Gleitringdichtung (1) durch Schätzen. Dieser weist eine Datenschnittstelle (21), die zum Erhalt von Datensignalen ($S_n$, $S_{T1}$, $S_{T2}$) zu einer Ringtemperatur ($T1$) eines Gleitrings (2) oder Gegenrings (3) der Gleitringdichtung (1) und einer Mediumstemperatur ($T2$) des Fördermediums (F) auf der zum Gleitring (2) weisenden Seite der Gleitringdichtung (1) und außerhalb eines Dichtspaltes (4) zwischen dem Gleitring (2) und dem Gegenring (3), jeweils als Eingangsgröße des Softsensors (20) ausgebildet ist, auf. Der Softsensor (20) umfasst eine Auswerteeinrichtung (22), die zur Schätzung der Reibleistung (L) durch Auswertung der Datensignale ($S_n$, $S_{T1}$, $S_{T2}$) ausgebildet ist, wozu die Auswerteeinrichtung (22) ein Auswertemodell umfassend ein Wärmestrommodell (M3) aufweist, wobei das Wärmestrommodell (M3) dazu ausgestaltet ist, basierend auf einer Temperaturdifferenz zwischen der Ringtemperatur ($T1$) und der Mediumstemperatur ($T2$) Wärmeströme in der Gleitringdichtung (1) zu beschreiben und das Auswertemodell dazu ausgestaltet ist, über die Wärmeströme auf die Reibleistung (L) zu schließen. Außerdem betrifft die Erfindung eine Pumpe hiermit und ein Verfahren zur Bestimmung der Reibleistung.

Fig. 1

# EP 4 509 813 A1

**Beschreibung**

Die Erfindung betrifft einen Softsensor, insbesondere zur Bestimmung einer Reibleistung einer Gleitringdichtung durch Schätzen, gemäß Anspruch 1. Außerdem betrifft die Erfindung eine Pumpe mit einem solchen Softsensor gemäß Anspruch 11. Schließlich betrifft die Erfindung ein computer-implementiertes Verfahren zur Schätzung einer Reibleistung einer Gleitringdichtung gemäß Anspruch 14.

Aus dem Stand der Technik sind Gleitringdichtungen und Pumpen hiermit bekannt. Ein Gleitring sitzt dabei auf einer Pumpenwelle und korrespondiert mit einem Gegenring in einem Gegenringsitz eines Gehäuses, durch den die Pumpenwelle hindurchführt. Die primäre Abdichtung der so ausgebildeten Drehdurchführung erfolgt mittels einem Dichtspalt zwischen dem Gleitring und dem Gegenring. So kann auch die Pumpe gemäß der Erfindung ausgestaltet sein. Dabei korreliert die Spalthöhe und damit der Reibwiderstand der Dichtung mit der Anpresskraft des Gleitrings an den Gegenring und Gegenkräften, die aus der Oberflächenstruktur im Gleitspalt, dem eindringenden Fluidfilm und der Wellendrehzahl resultieren.

Es wurde vorliegend festgestellt, dass bereits eine unsachgemäße Vorspannung des Gleitrings in Richtung des Gegenrings bei Pumpen eine Leistungsaufnahme von bis zu 8 % der Gesamtmotorleistung verursacht, eine sachgemäße Vorspannung hingegen nur circa 1 %. Verunreinigungen von Feder und Gleitflächen, Federermüdung, Temperaturwechsel und Oberflächenveränderungen durch Abnutzungen können die Vorspannung und Dichtspaltausbildung ändern, sodass die Leistungsaufnahme über die Nutzungsdauer ungewollt ansteigen kann.

Aus dem Stand der Technik sind verschiedene Vorgehensweisen zur Erfassung des Betriebszustandes von Gleitringdichtungen bekannt. So ist in EP 0 886 088 A2 ein Verfahren beschrieben, bei dem zur Ermittlung der Ausfallwahrscheinlichkeit bzw. prognostizierten Restlebensdauer von Gleitringdichtungen der Druck des Fördermediums, die Temperatur des Fördermediums, die Gegenringtemperatur, der Leckagedruck und die Feuchtigkeit auf der dem Medium abgewandten Seite der Gleitringdichtung gemessen werden. Die Messwerte werden dabei zyklisch mit Frequenzen zwischen 0,1 und 2,0 Hz erfasst. Für die Auswertung der Messwerte sind sechs Zustände festgelegt, die über Vergleichswerte mit den einzelnen Messwerten korrelieren. Bei diesen Zuständen werden die Messwerte des Drucks sowie der Temperatur einzeln mit Vergleichswerten verglichen. Durch eine Zustandskombination verknüpft mit der bisherigen Betriebszeit, wird eine Ampelvisualisierung des Dichtungszustandes angesteuert. Für die Vergleichswerte und Korrelationen sind umfassende Daten zu der individuell verbauten Dichtung erforderlich, um Grenzwerte zu definieren. Auch besitzt die Ampelvisualisierung nur eine sehr geringe Informationsdichte und macht damit keine konkreten Angaben zum Zustand, möglichen Ausfallursachen sowie für die Suche nach Abstellmaßnahmen.

Eine andere Größe für die Beurteilung des Zustandes einer Gleitringdichtung ist das Reibmoment. Dieses wird gemäß WO 2010/142367 A1 bzw. EP 2 440 816 A1 direkt am Gegenring der Gleitringdichtung gemessen. Dazu ist zwischen Gegenring und Gegenringsitz ein Biegebalken angeordnet, der den Torsionswinkel des Gegenrings im Gegenringsitz erfasst und daraus das Reibmoment ableitet. Das gemessene Reibmoment wird in einer Auswerteeinrichtung verarbeitet, wobei hier der Betriebszustand der Gleitringdichtung bestimmt werden kann. Dieses Verfahren lässt jedoch keinerlei Aussagen über den Zustand des Fördermediums im Dichtspalt oder der Temperatur des Gegenrings zu. Zudem ist es erforderlich, dass der Gegenring und der Gegenringsitz entsprechende Aufnahmen, bspw. passende Nuten oder Bohrungen, für den Eingriff des Biegebalkens besitzen. Aufgrund des notwendigen Drehfreiheitsgrades des Gegenrings im Gegenringsitz, ist hier die Abdichtung schwierig.

In EP 4 008 934 A2 wird ein Auswertesystem beschrieben, dass den Zustand und insbesondere den Schmiermittelverlust im Dichtspalt von Gleitringdichtungen detektiert. Erfasst werden dabei die Temperatur des Fördermediums in Dichtungsnähe, die akustischen Emissionen in der Nähe der Gleitringdichtung, die Dichtungsdrehzahl und der Fördermediumsdruck. Im Auswertesystem integriert finden sich verschiedene Logikmodule, die Fehlerzustände detektieren können und darüber die Ausfallwahrscheinlichkeit der Dichtung kalkulieren. Als Ausfallursachen können der Verlust des Fördermediums im Dichtspalt, ein zu geringer Durchfluss durch den Dichtspalt, Druckumkehr des Fördermediums oder Kavitation erkannt werden. Da von jeder Messgröße mehrere Sensoren installiert werden können, kann das System ein umfassendes und hochauflösendes Bild der Gleitringdichtung erstellen. Die Informationsdichte über den Zustand der Gleitringdichtung ist als sehr hoch einzustufen, gleichzeitig jedoch auch die Komplexität und damit die Integrationskosten.

DE 10 2015 226 311 A1 gibt ein Verfahren an, bei dem der Dichtspalt durch Lamb-Rayleigh-Wellen überwacht wird. Hierzu sind am Gleitring oder am Gegenring ein Sender und ein Empfänger anzubringen, die Lamb-Rayleigh-Wellen in den Ring induzieren und auswerten. Aus der Signaländerung zwischen Sender und Empfänger lassen sich Rückschlüsse auf den Dichtspalt ziehen, wie z.B. Dichtspalthöhe oder Spaltfüllungsgrad. Die Informationsdichte für den Dichtungszustand ist als mittelmäßig einzustufen, da es sich nur um einen Messwert handelt und damit kein umfassendes Bild über die Dichtung erzeugt werden kann.

In WO 2008 148 496 A1 ist ein Verfahren beschrieben, bei dem auf Grundlage von Temperaturmessungen am Gegenring einer Gleitringdichtung Betriebszustände der Gleitringdichtung erfasst werden. Dabei wird der Gegenring mit zumindest zwei Temperatursensoren überwacht, um einen Temperaturgradienten zwischen den Messstellen zu bestimmen. Aus dem Temperaturgradient im Gegenring lassen sich Betriebszustände der Gleitringdichtung wie Normalbetrieb oder Trockenlauf erkennen. Erforderlich ist jedoch, dass der Gegenring mit mehreren Temperatursensoren ausgestattet wird, wobei insbesondere die Temperaturmessung an der Gleitfläche im Dichtspalt einen hohen Integrationsaufwand bedeutet.

Aufgabe der Erfindung ist es deshalb, eine Lösung bereitzustellen, die mit einem geringen Integrations- und Kostenaufwand eine möglichst präzise Angabe über den Momentanzustand und den Verschleißzustand einer Gleitringdichtung erlaubt.

Hauptmerkmale der Erfindung sind in den Ansprüchen 1, 11 und 14 angegeben. Ausgestaltungen sind Gegenstand der Ansprüche 2 bis 10, 12 bis 13 und 15 bis 16.

Die Erfindung betrifft einen Softsensor, insbesondere zur Bestimmung einer Reibleistung einer Gleitringdichtung durch Schätzen, mit einer Datenschnittstelle, die zum Erhalt von Datensignalen zu einer Ringtemperatur eines Gleitrings oder Gegenrings der Gleitringdichtung und einer Mediumstemperatur des Fördermediums auf der zum Gleitring weisenden Seite der Gleitringdichtung und außerhalb eines Dichtspaltes zwischen dem Gleitring und dem Gegenring, jeweils als Eingangsgröße des Softsensors ausgebildet ist. Der Softsensor weist zudem eine Auswerteeinrichtung auf, die zur Schätzung der Reibleistung durch Auswertung der Datensignale ausgebildet ist, wozu die Auswerteeinrichtung ein Auswertemodell umfassend ein Wärmestrommodell aufweist, wobei das Wärmestrommodell dazu ausgestaltet ist, basierend auf einer Temperaturdifferenz zwischen der Ringtemperatur und der Mediumstemperatur Wärmeströme in der Gleitringdichtung zu beschreiben, und das Auswertemodell dazu ausgestaltet ist, über die Wärmeströme auf die Reibleistung zu schließen.

In Kenntnis der Ringtemperatur an einer Messposition sowie der Mediumstemperatur als Grenztemperatur der an das Fluid angrenzenden Flächen der Gleitringdichtung außerhalb des Dichtspaltes lässt sich mit Hilfe des Auswertemodells auf einen Wärmestrom und damit auch auf einen Wärmeeintrag in den Gleit- und/oder Gegenring im Dichtspalt schließen. Dieser Wärmeeintrag korreliert mit der Reibleistung. Das Schätzen kann also als eine Modellrechnung verstanden werden, die insbesondere aufgrund von Modellfehlern nur eine Näherung erlaubt. Auf einfache Weise wird so bspw. ein Trockenlauf der Gleitringdichtung erkannt. Das Vorgehen beruht auf dem Ansatz, dass die Temperaturdifferenz und/oder eine Veränderung der Temperaturdifferenz zwischen Ringtemperatur und Mediumstemperatur die Folge der Reibleistung der Gleitringdichtung ist. Das Auswertemodell sollte dazu ausgestaltet sein, aus der Temperaturdifferenz Rückschlüsse auf den Wärmestrom zu ziehen, welcher von demjenigen aus Gleitring und Gegenring, an dem die Ringtemperatur bestimmt wird, an das Fördermedium übergeht. Dabei kann auch die Drehzahl berücksichtigt werden. Für den Wärmeübergang von der Gleitringdichtung auf das Fördermedium ist nämlich die Bewegungsgeschwindigkeit des Fördermediums an den Oberflächen der Gleitringdichtung ein zu berücksichtigender Einflussfaktor. Das Fördermedium zirkuliert bspw. im Pumpengehäuse in Abhängigkeit der Drehzahl des Pumpenrades, die der Drehzahl des Gleitrings entspricht. Zudem rotiert der Gleitring, sodass hierdurch bedingt Fördermedium an den Oberflächen des Gleitrings vorbeiströmt. Darauf gestützt kann das Auswertemodell den Energieerhaltungssatz anwenden, wobei die abgeführte Wärme (ein Teil der Wärmeströme) quantifiziert werden und hieraus auf die Reibleistung geschlossen werden kann. Die eigentliche Bestimmung durch Schätzen wird von der Auswerteeinrichtung durchgeführt, wobei der Softsensor als übergeordnete Baugruppe weitere periphere Mittel rund um die Auswerteeinrichtung umfasst.

In der Regel werden zur Integration des Softsensors lediglich die Auswerteeinrichtung mit dem Auswertemodell und zwei Temperatursensoren benötigt. Die Temperaturmessstelle zur Erfassung der Ringtemperatur der Gleitringdichtung liegt vorzugsweise auf der dem Gleitring abgewandten Seite des Gegenrings. Optional ist noch die Drehzahl einbeziehbar, die meist aus der Pumpensteuerung bekannt ist, sodass hierfür eine Datenschnittstelle ausreicht. Kennt man erstmal die momentane Reibleistung ergibt sich durch die Betrachtung über der Zeit auch der Verschleiß der Gleitringdichtung, da aus der Reibleistung heraus Rückschlüsse auf den Reibungszustand gezogen werden können. Bei dem Fördermedium handelt es sich bevorzugt um eine Flüssigkeit. Dann nämlich sind die Wärmeübergänge vom und zur Flüssigkeit derart groß, dass Wärmeübertragungen auf andere Bauteile bei der Schätzung eher außer Betracht gelassen werden können. Außerdem lassen sich diskrete Angaben in Kenntnis der Reibleistung ausgeben, wie "kritischer Betriebszustand, "Festkörperreibung", "Mischreibung", "Fluidreibung", "Wartung der Gleitringdichtung erforderlich", etc.

In einer speziellen Ausführungsform ist die Auswerteeinrichtung dazu ausgestaltet, die Schätzung der Reibleistung über eine im Dichtspalt in die Gleitringdichtung eingeleitete, geschätzte Wärmeleistung gemäß dem Wärmestrommodell vorzunehmen. Man nimmt also eine thermische bzw. energetische Betrachtung vor und modelliert einen Energieerhaltungssatz über der Gleitringdichtung, deren Grundannahme es ist, dass der Gleitringdichtung im Dichtspalt Energie zufließt und außerhalb des Dichtspaltes wieder abfließt. Aus dem Abfluss von Energie, der sich aus den Wärmeströmen ergibt, wird auf die zugeflossene Energie und die Reibleistung geschlossen.

Gemäß einer näheren Ausgestaltung des Softsensors ist vorgesehen, dass das Auswertemodell die Geometrie des Gegenrings und den oder die Wärmeleitwerte der Materialien, aus denen der Gegenring ausgebildet ist, einbezieht. Damit wird die statische Infrastruktur der Wärmeströme beschrieben, welche auf der Konstruktion des Gegenrings basiert.

Alternativ oder ergänzend kann das Auswertemodell die Geometrie des Gleitrings und den oder die Wärmeleitwerte der Materialien, aus denen der Gleitring ausgebildet ist, einbeziehen. Damit wird die statische Infrastruktur der Wärmeströme beschrieben, welche auf der Konstruktion des Gleitrings basiert.

Stützt man das Wärmestrommodell beispielsweise allein auf die Geometrie des Gegenrings und dem oder den Wärmeleitwerten von dessen Materialien und schließt hierauf auf die Reibleistung im Dichtspalt, bleibt der Abfluss von Wärmeenergie aus dem Dichtspalt über den Gleitring an das Fördermedium unberücksichtigt oder man muss diesen Abfluss überschlagen bzw. schätzen. Bezieht man den Gleitring hingegen in dem Wärmestrommodell mit ein, wird die Schätzung der Reibleistung präziser. Das gilt insbesondere, wenn die Ringtemperatur am Gegenring bestimmt wird, was oftmals wegen des unbeweglichen Einbaus praktikabler ist. Gleiches gilt jedoch auch entsprechend umgekehrt, wenn die Ringtemperatur am Gleitring bestimmt wird.

Optional bezieht das Wärmestrommodell zudem die Geometrie von angrenzenden Bauteilen, mit denen die Gleitringdichtung in Festkörperkontakt steht, und den oder die Wärmeleitwerte der Materialien, aus denen diese angrenzenden Bauteile ausgebildet sind, ein. Optional kann jedoch auch genau hierauf verzichtet werden, insbesondere, wenn das Fördermedium eine Flüssigkeit ist. Dann nämlich ist der Wärmeübergang auf das Fördermedium derart groß, dass die Wärmeströme in angrenzende Bauteile oder an die Umgebung oder Umgebungsluft vernachlässigt werden können.

Weiterhin kann das Wärmestrommodell dazu ausgestaltet sein, (insbesondere interne) Wärmeströme zwischen Oberflächen desjenigen aus Gleitring und Gegenring zu bestimmen, an dem die Ringtemperatur bestimmt wird, nämlich basierend auf der Mediumstemperatur als Grenzflächentemperatur der mit dem Fördermedium in Kontakt stehenden Oberflächen (des Gleitrings bzw. Gegenrings) einerseits, insbesondere exklusive der Oberfläche im Dichtspalt, und den anderen der Oberflächen (des Gleitrings bzw. Gegenrings) andererseits. Dabei ist die Auswerteeinrichtung dazu ausgestaltet, aus den Wärmeströmen die über die Oberfläche im Dichtspalt in denjenigen aus Gleitring und Gegenring, an dem die Ringtemperatur bestimmt wird, eingebrachte Wärmeleistung zu schätzen, und basierend auf dieser eingebrachten Wärmeleistung die Reibleistung zu schätzen. In Kenntnis von nur zwei Temperaturen, die an zwei bekannten Stellen bzw. Bereichen der Gleitringdichtung bekannt sind, nämlich der Messstelle der Ringtemperatur und der Mediumstemperatur lässt sich mit dem Wärmestrommodell ermitteln, wie die Wärmeströme aufgrund der Temperaturgefälle im Gleitring und/oder Gegenring ablaufen. Die Messstelle der Ringtemperatur sollte nicht in Kontakt mit dem Fördermedium stehen, insbesondere, um ein (insbesondere signifikantes) Temperaturgefälle zwischen den Oberflächen zum Fördermedium und der Messstelle zu ermöglichen. In guter Näherung entspricht die Temperatur an der Messstelle der Mediumstemperatur, wenn die Pumpe schon eine längere Zeit stillsteht. Sobald die Temperatur an der Messstelle ansteigt, lässt sich hierüber erstmal auf einen nicht-quantifizierten Wärmeeintrag im Dichtspalt schließen. Mit Hilfe der Betrachtung der Wärmeströme lässt sich auch auf die Höhe des Wärmeeintrags bzw. die Wärmeleistung in den Gegenring und/oder Gleitring im Dichtspalt schließen. Diese Wärmeleistung bildet einen signifikanten Anteil der gesamten Reibleistung aus.

Alternativ oder ergänzend kann das Wärmestrommodell dazu ausgestaltet sein, (insbesondere interne) Wärmeströme zwischen Oberflächen desjenigen aus Gleitring und Gegenring zu bestimmen, an dem die Ringtemperatur nicht bestimmt wird, nämlich basierend auf der Mediumstemperatur als Grenzflächentemperatur der mit dem Fördermedium in Kontakt stehenden Oberflächen (des Gleitrings bzw. Gegenrings) einerseits, insbesondere exklusive der Oberfläche im Dichtspalt, und den anderen der Oberflächen (des Gleitrings bzw. Gegenrings) andererseits. Dabei ist die Auswerteeinrichtung dazu ausgestaltet, aus den Wärmeströmen die über die Oberfläche im Dichtspalt in denjenigen aus Gleitring und Gegenring, an dem die Ringtemperatur nicht bestimmt wird, eingebrachte Wärmeleistung zu schätzen, und basierend auf dieser eingebrachten Wärmeleistung die Reibleistung zu schätzen. Die Betrachtung des Bauteils, an dem die Messstelle nicht platziert ist, ist naturgemäß weniger trivial, weswegen diese Betrachtung vorzugsweise zusätzlich erfolgt, d.h. in Ergänzung zur Betrachtung des anderen Bauteils aus Gleitring und Gegenring. Insbesondere, wenn die in den Gleitring und in den Gegenring eingebrachte Wärmeleistung bestimmt wird, ist die Reibleistung in guter Näherung die Summe dieser beiden Wärmeleistungen. Demgegenüber ist die Wärmeleistung, die vom Fördermedium innerhalb des Dichtspaltes unmittelbar an das umgebende Fördermedium oder die Pumpenwelle abgegeben wird, vernachlässigbar oder bspw. einfach durch Anteilsfaktoren schätzbar.

Das Wärmestrommodell wiederum sollte zur quasistationären Beschreibung der aktuellen Wärmeströme in der Gleitringdichtung ausgestaltet sein.

Vorzugsweise weist das Auswertemodell ein Wärmeübergangsmodell zur Beschreibung von Wärmeübergangsvorgängen von der Gleitringdichtung weg auf, insbesondere auf das Fördermedium, auf angrenzende Bauteile wie einen Gegenringsitz, eine Pumpenwelle und/oder auf die sonstige Umgebung der Gleitringdichtung. Hierdurch wird eine präzisere Bestimmung der Wärmeströme ermöglicht, denn durch Kenntnis der Wärmeübergänge lässt sich feststellen wieviel Energie in welchem Oberflächenbereich abgegeben werden kann und damit letztlich auch, wieviel Energie mit den Wärmeströmen zu welchem Oberflächenbereich transportiert wird. Sofern das Fördermedium eine Flüssigkeit ist, lässt sich das Wärmeübergangsmodell in guter Näherung auf die Wärmeübergänge auf das Fördermedium beschränken.

Gemäß einer näheren Ausgestaltung ist die Datenschnittstelle zum Erhalt eines Datensignals zu einer Drehzahl des Gleitrings der Gleitringdichtung als Eingangsgröße des Softsensors ausgebildet. Mit der Kenntnis der Drehzahl lässt sich die Präzision der Auswertung erhöhen, denn bspw. bei sehr hohen Drehzahlen liegt trotz zunehmender Fluidreibung ein günstiger Zustand mit Fluidreibung vor, der kaum Verschleiß bedingt, während die gleiche Reibleistung bei einer niedrigeren Drehzahl eine Mischreibung mit höherem Verschleiß sein kann. Außerdem kann insbesondere das Wärmeübergangsmodell mit der Kenntnis der Drehzahl verbessert werden.

Im Speziellen ist vorgesehen, dass zumindest das Wärmeübergangsmodell dazu ausgestaltet ist, das Datensignal zu der Drehzahl des Gleitrings als Eingangsgröße einzubeziehen.

Das Wärmeübergangsmodell umfasst im Besonderen die Schätzung des Wärmeübergangskoeffizienten aufgrund der Geometrie der Gleitringdichtung und deren Drehzahl bzw. der Drehzahl des Gleitrings. Als Wärmeübergang wird die Wärmeübertragung zwischen der Oberfläche eines Festkörpers und einem Fluid bezeichnet. Ein Wärmeübergang zwischen zwei Festkörpern wird hier vorzugsweise nicht beschrieben.

Weiterhin kann das Auswertemodell ein Wärmeleitmodell zur Beschreibung eines Temperaturfeldes in der Gleitringdichtung aufweisen. Über das Wärmeleitmodell lassen sich insbesondere Temperaturen wie z.B. die an der Oberfläche im Spalt berechnen. Hierzu sollte insbesondere das Wärmeleitmodell die Geometrie des Gegenrings und den oder die Wärmeleitwerte der Materialien, aus denen der Gegenring ausgebildet ist, einbeziehen; und/oder die Geometrie des Gleitrings und den oder die Wärmeleitwerte der Materialien, aus denen der Gleitring ausgebildet ist, einbeziehen. Im Speziellen kann das Wärmeleitmodell statisch bzw. quasistatisch sein. Das Wärmeleitmodell stützt sich (insbesondere ausschließlich) auf quasistationäre Zustände. Zu jedem Zeitschritt eines Zyklus der Messwertaufnahme, werden die Messwerte im Modell als stationär angesehen. Aufgrund der gewählten Temperaturmessstelle, bspw. rückwärtig am Gegenring der Gleitringdichtung, können dynamische Temperaturänderungen infolge einer geänderten Reibleistung nur verzögert erkannt werden. Dynamische Reibleistungsänderungen werden somit gedämpft wiedergegeben. Im Wärmeleitmodell wird das Temperaturgefälle bzw. das Temperaturfeld zwischen der Temperaturmessstelle am Gegenring bzw. Gleitring und der mittleren Spalttemperatur im Dichtspalt beschrieben. Dies ist deshalb von Vorteil, weil über die ermittelte Spalttemperatur ohne zusätzliche Messwerte auch der Wärmestrom im anderen aus Gegenring und Gleitring der Gleitringdichtung geschätzt werden kann.

Gemäß einer speziellen Ausgestaltung des Softsensors ist das Wärmestrommodell dazu ausgestaltet, das Temperaturfeld nach dem Wärmeleitmodell und/oder die Wärmeübergänge nach dem Wärmeübergangsmodell als Eingangsgrößen einzubeziehen. Hierdurch gelingt es, die Änderungen der Wärmeströme zu erfassen, die jeweils bei einem aktuellen Temperaturfeld und in Kenntnis des Wärmeleitmodells innerhalb der Gleitringdichtung und der Wärmeübergänge zwischen der Gleitringdichtung und deren Peripherie vorliegen.

Zudem sollte das Temperaturfeld zur quasistationären Beschreibung der aktuellen lokalen Temperaturen, also des Temperaturfelds in der Gleitringdichtung ausgestaltet sein.

Die Erfindung betrifft außerdem eine Pumpe (auch als Pumpvorrichtung bezeichenbar) mit einer Gleitringdichtung und einem Softsensor wie er vor- und nachstehend beschrieben ist, wobei die Gleitringdichtung einen rotierend um eine Lagerachse angeordneten Gleitring und einen drehfest angeordneten Gegenring, der über einen Dichtspalt mit dem Gleitring korrespondiert, aufweist. Der Gleitring ist auf einer Pumpenwelle, insbesondere mit einem Pumpenrad, und der Gegenring in einem Gegenringsitz angeordnet. Weiterhin weist die Pumpe einen ersten Temperatursensor auf, der zur Erfassung der Ringtemperatur ausgebildet und mit der Datenschnittstelle kommunizierend verbunden ist. Zudem weist die Pumpe einen zweiten Temperatursensor auf, der zur Erfassung der Mediumstemperatur des Fördermediums auf der zum Gleitring weisenden Seite der Gleitringdichtung und außerhalb des Dichtspaltes ausgebildet und mit der Datenschnittstelle kommunizierend verbunden ist.

Die so mit dem Softsensor ausgestattete Pumpe lässt sich nunmehr hinsichtlich des Momentanzustands der Gleitringdichtung sowie auch deren Verschleiß über der Zeit überwachen, insbesondere durch Schätzung der Reibleistung mit Hilfe der Modelle des Softsensors.

Vorzugsweise liegt eine Messstelle des ersten Temperatursensors an einer nicht für den Temperatursensor bearbeiteten Oberfläche des Gegenrings. Der Gegenring braucht dann keine speziell für den Temperatursensor ausgebildeten Oberflächen, Aussparungen, Löcher oder Nuten. Es kann hierdurch auch eine nicht-speziell für den Softsensor präparierte Gleitringdichtung überwacht werden. Weiterhin liegt die Messstelle des Temperatursensors vorzugsweise an einer Oberfläche, die keinen Kontakt zum Fördermedium hat. Hierdurch wird ein großes Temperaturgefälle als Ausgangsbasis für das Auswertemodell bereitgestellt.

Gemäß einer näheren Ausgestaltung der Pumpe ist der Gleitring entlang der Lagerachse axial verschiebbar gelagert und mit einer Federkraft axial in Richtung des Gegenrings belastet. Ohne fluiddynamische Gegenkräfte, die bei Rotation im Dichtspalt entstehen, wird der Gleitring gegen den Gegenring gedrückt. Je nach Ausrichtung der Lagerachse fließen noch Gewichtskräfte in den Anpressdruck mit ein. Bei Aufnahme der Rotation des Gleitrings können Strömungen des Fördermediums im Pumpeninneren ergänzende Kräfte auf den Gleitring ausüben. Erst wenn die fluiddynamischen und -statischen Kräfte im Dichtspalt die auf den Gleitring wirkenden Kräfte übersteigen, bewegt sich der Gleitring von dem Gegenring weg und es bildet sich eine Dichtspalthöhe aus, die eine Festkörperreibung und Mischreibung verhindert. Die Reibleistung im Dichtspalt fällt relativ stark ab, sobald sich der Dichtspalt aufbaut. Im Anschluss beschränkt sich die Reibleistung auf eine Flüssigkeitsreibung, die aus Turbulenzen innerhalb des Fördermediums im Dichtspalt und Reibung des Fördermediums am Gleitring und Gegenring sowie den viskosen Kräften im Dichtspaltmedium resultiert. Der Verschleiß erreicht bei einer Flüssigkeitsreibung ein Minimum. Dieser Betriebszustand der Gleitringdichtung ist stets anzustreben.

Außerdem weist die Pumpe vorzugsweise einen Drehzahlgeber auf, der zur Übertragung des Datensignals zur Drehzahl der Pumpenwelle oder des Gleitrings kommunizierend mit der Datenschnittstelle verbunden ist. Damit lässt sich die Drehzahl in dem Auswertemodell berücksichtigen.

Die Flüssigkeitsreibung steigt mit steigender Drehzahl an, sodass nicht allein in Kenntnis der Reibleistung bspw. auf eine Mischreibung oder eine Flüssigkeitsreibung geschlossen werden könnte. Deshalb ist die Auswerteeinrichtung vorzugsweise dazu ausgestaltet, basierend auf der Kenntnis des Verlaufs der Drehzahl und der aktuellen Reibleistung auf den Reibungszustand, insbesondere Festkörperreibung, Mischreibung und Flüssigkeitsreibung, zu schließen. Hierauf basierend bewertet die Auswertevorrichtung vorzugsweise den Verschleiß der Gleitringdichtung.

Weiterhin kann der Gleitring über eine erste Nebendichtung relativ zur Pumpenwelle abgedichtet sein. Das verhindert einen Durchtritt von Fördermedium zwischen Gleitring und Pumpenwelle, insbesondere am Dichtspalt vorbei in die Umgebung. Die Nebendichtung kann durch eine Passung ausgebildet sein, bevorzugt handelt es sich bei der Nebendichtung jedoch um ein separates Element, beispielsweise einen O-Ring aus Gummi.

Des Weiteren kann der Gegenring über eine zweite Nebendichtung relativ zum Gegenringsitz abgedichtet sein. Der Gegenringsitz wiederum kann beispielsweise einteilig in einem Pumpengehäusebauteil ausgebildet sein, oder er kann beispielsweise als Einbauteil mit einem Pumpengehäusebauteil verbunden sein.

Fernerhin betrifft die Erfindung ein Computer-implementiertes Verfahren, insbesondere zur Bestimmung einer Reibleistung einer Gleitringdichtung durch Schätzen, umfassend zumindest die folgenden Schritte:

- Ermitteln einer Ringtemperatur des Gleitrings oder des Gegenrings, und einer Mediumstemperatur des Fördermediums auf einer zum Gleitring weisenden Seite der Gleitringdichtung und außerhalb eines Dichtspaltes zwischen dem Gleitring und dem Gegenring;
- Ausführen eines Auswertemodells umfassend ein Wärmestrommodell, wobei das Wärmestrommodell dazu ausgestaltet ist, basierend auf einer Temperaturdifferenz zwischen der Ringtemperatur und der Mediumstemperatur Wärmeströme in der Gleitringdichtung zu beschreiben und das Auswertemodell dazu ausgestaltet ist, über die Wärmeströme auf die Reibleistung zu schließen,
- Bereitstellen der Reibleistung.

Die Vorteile des Verfahrens entsprechen im Grunde denjenigen des Softsensors. Dabei kann das Verfahren insbesondere auch mit einem Softsensor oder einer Pumpe wie sie vor- und nachstehend angegeben sind durchgeführt werden.

Im Besonderen kann das Auswertemodell optional ein Wärmeübergangsmodell zur Beschreibung von Wärmeübergangsvorgängen von der Gleitringdichtung weg umfassen, insbesondere auf das Fördermedium, auf angrenzende Bauteile wie einen Gegenringsitz, eine Pumpenwelle und/oder auf die sonstige Umgebung der Gleitringdichtung.

Schließlich kann das Auswertemodell auch ein Wärmeleitmodell nutzen, dies insbesondere um die Wärmeströme und/oder Wärmeübergänge anhand der Temperaturverteilung bzw. des Temperaturfeldes präziser zu bestimmen.

Im Speziellen kann vorgesehen sein, dass das Ausführen des Auswertemodells ein Wärmeübergangsmodell zur Beschreibung von Wärmeübergangsvorgängen zwischen der Gleitringdichtung und zumindest dem umgebenden Fördermedium; und/oder ein Wärmeleitmodell zur Beschreibung eines Temperaturfelds in der Gleitringdichtung umfasst.

Optional kann die Gleitringdichtung einen rotierend um eine Lagerachse angeordneten Gleitring, einen drehfest angeordneten Gegenring, der über einen Dichtspalt mit dem Gleitring korrespondiert, und einen Softsensor, der zur Ausführung des Auswertemodells ausgestaltet ist, aufweisen, und das Verfahren die folgenden Schritte umfassen:

- Übermitteln der Ringtemperatur und der Mediumstemperatur als eingehende Datensignale an den Softsensor;
- Ausführen des Auswertemodells mit dem Softsensor basierend auf den eingehenden Datensignalen mit Hilfe des Auswertemodells.

Der Softsensor kann insbesondere wie vor- und nachstehend beschrieben ausgebildet sein.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:

Fig. 1    eine schematische Ansicht einer Gleitringdichtung einer Pumpe mit einem Softsensor;

Fig. 2    eine schematische Ansicht einer Gleitringdichtung einer Pumpe;

Fig. 3    einen Graph, der die Reibleistung einer Gleitringdichtung über der Drehzahl zeigt; und

Fig. 4    einen Vergleichsgraphen der Reibleistung über der Zeit durch Prüfstanderfassung und Softsensorschätzung.

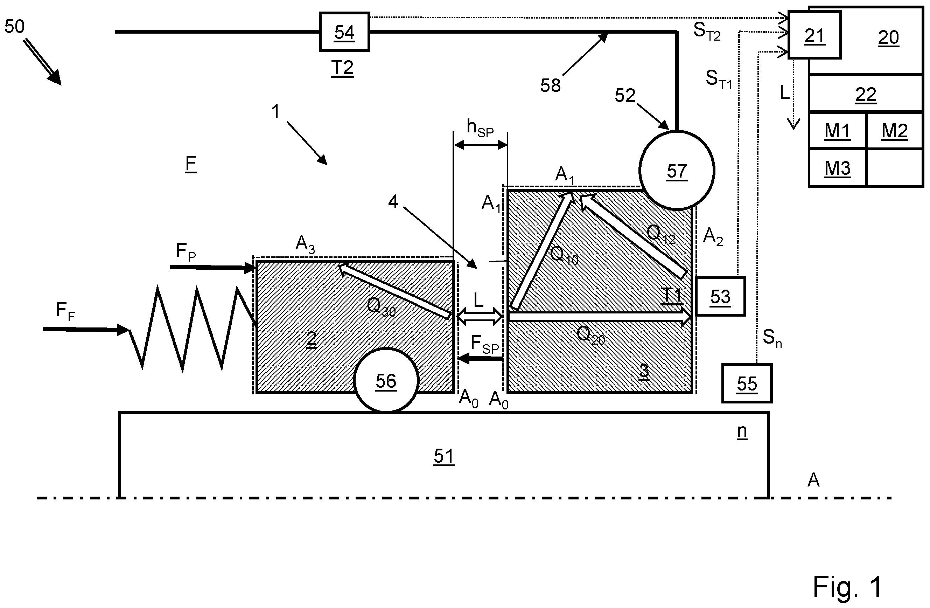

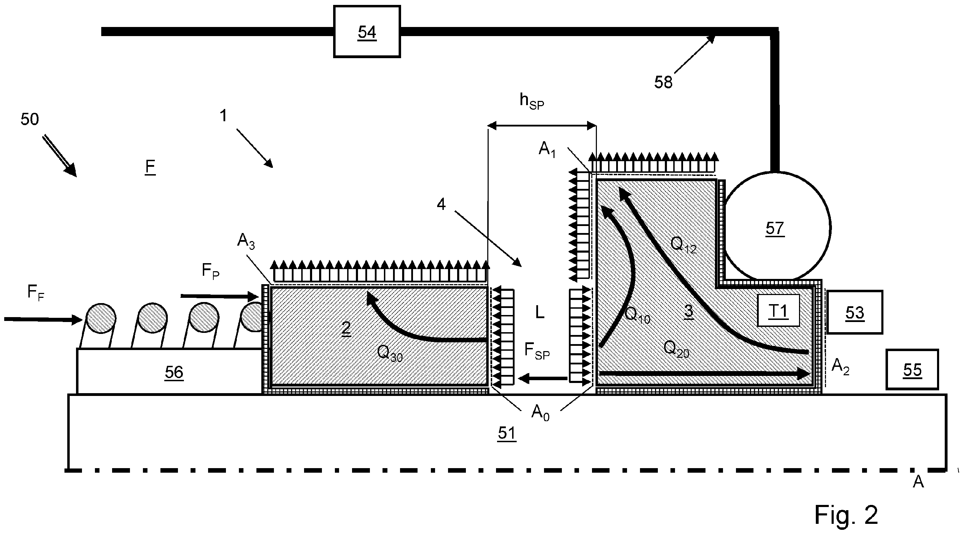

**Fig. 1** und 2 zeigen jeweils einen schematischen Ausschnitt einer Pumpe 50, in der eine Gleitringdichtung 1 angeordnet ist. Die Gleitringdichtung 1 weist einen rotierend um eine Lagerachse A angeordneten Gleitring 2 auf, der auf einer Pumpenwelle 51 sitzt. Zwischen dem Gleitring 2 und der Pumpenwelle 51 sitzt eine erste Nebendichtung 56. Die Gleitringdichtung 1 verfügt außerdem über einen drehfest angeordneten Gegenring 3, der über einen Dichtspalt 4 mit dem Gleitring 2 korrespondiert. Der Gegenring 3 ist in einem Gegenringsitz 52 eines Pumpengehäusebauteils 58 festgelegt und diesem gegenüber mit einer zweiten Nebendichtung 57 abgedichtet. Der Gleitring 2 ist entlang der Lagerachse A axial verschiebbar auf der Pumpenwelle 51 gelagert und ist mit einer Federkraft $F_F$ axial in Richtung des Gegenrings 3 belastet. Zusätzlich können weitere Kräfte $F_P$ auf den Gleitring 2 wirken, beispielsweise aufgrund der Anströmung mit einem Fördermedium F im Inneren der Pumpe 50. Außerhalb des Pumpengehäusebauteils 58 ist üblicherweise die Atmosphäre.

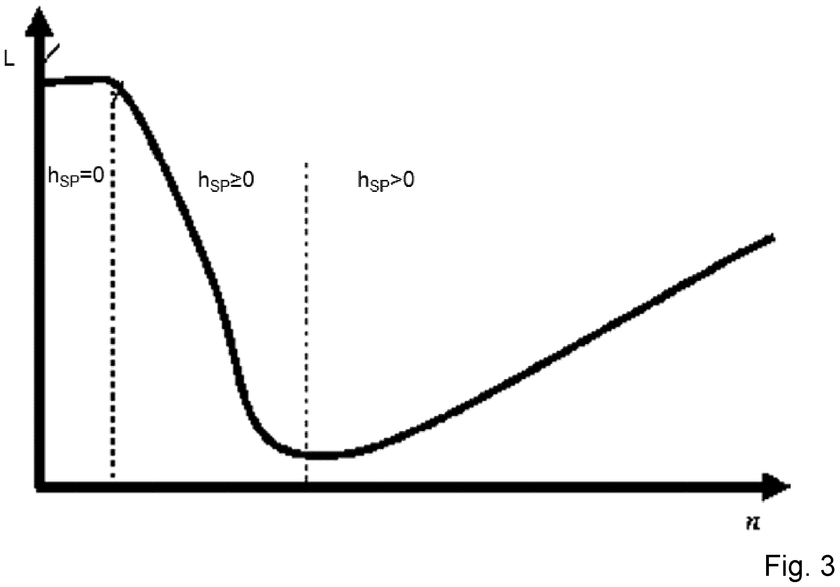

Bei sachgemäßem Betrieb und sachgemäßer Konstruktion und Auslegung der Komponenten steigt im Betrieb der Gleitringdichtung 1 eine Höhe $h_{SP}$ des Dichtspalts über 0, wodurch der Gleitring 2 und der Gegenring 3 voneinander getrennt werden. Durch den Dichtspalt > 0 kann somit Fördermedium F aus dem Pumpengehäuse in die Atmosphäre austreten. Typische Höhen $h_{SP}$ des Dichtspalts 4 im Betrieb liegen meist zwischen 100 nm und 10 $\mu$m, weshalb die Leckage von Fördermedium F durch den Dichtspalt 4 als vernachlässigbar gering angesehen werden kann. Damit sich zwischen dem Gleitring 2 und dem Gegenring 3 der Dichtspalt 4 über die Höhe $h_{SP}$ = 0 hinaus aufbauen kann, muss eine Spaltkraft $F_{Sp}$ wirken. Diese resultiert im Wesentlichen aus der Strömung des Fördermediums F innerhalb des Dichtspaltes 4. Erst wenn die Spaltkraft $F_{Sp}$ die Summe aus Federkraft $F_F$ und der sonstigen Kräfte $F_P$ übersteigt zzgl. Ggf. etwaiger Reibkräfte der ersten Nebendichtung 56, entfernt sich der Gleitring 2 vom Gegenring 3. Die Spaltkraft $F_{Sp}$ baut sich bspw. auch in Abhängigkeit der Strukturierung der Gleitflächen sowie der Dynamik des Gleitrings 2 auf. Im Betrieb der Gleitringdichtung 1 kann man zwischen drei Reibungszuständen unterscheiden, die in **Fig. 3** dargestellt sind.

In Fig. 3 sieht man einen Graphen, der die Reibleistung L einer Gleitringdichtung 1 über der Drehzahl n zeigt. Dabei sind drei Drehzahlzonen durch zwei vertikale, gestrichelte Linien gekennzeichnet. Beträgt die Höhe $h_{SP}$ des Dichtspaltes 4 null, so liegt Festkörperreibung und damit auch eine hohe Reibleistung L und hoher Verschleiß vor. Die Reibleistung L lässt sich dabei in einen Wärmeeintrag in den Gleitring 2 und einen Wärmeeintrag in den Gegenring 3 unterteilen. Ab einer ersten Drehzahl n beträgt die Höhe $h_{SP}$ des Dichtspaltes 4 $\geq$ 0 und es liegt nur noch partieller und/oder temporärer Festkörperkontakt vor. Dieser Zustand lässt sich als Mischreibung bezeichnen. Mit zunehmender Drehzahl n, sinkt der Anteil der Festkörperreibung immer weiter, bis bei einer zweiten Drehzahl n kein Festkörperkontakt mehr zwischen dem Gleitring 2 und dem Gegenring 3 besteht. Dieser Zustand nennt sich Flüssigkeitsreibung, bei der Gleitring 2 und Gegenring 3 vollständig entkoppelt sind. Die Reibleistung L und der Verschleiß erreichen dabei ein Minimum. Dieser Betriebszustand der Gleitringdichtung 1 ist für den Normalbetrieb anzustreben. Erhöht man die Drehzahl n nunmehr weiter, steigen die Reibungsverluste L durch die Fluiddynamik in dem Dichtspalt 4 weiter an, was sich auch in einer ansteigenden Reibleistung L niederschlägt.

Die Reibleistung L im Dichtspalt 4 der Fig. 1 und 2 wird aufgrund des resultierenden Temperaturdeltas aus dem Dichtspalt 4 abgeleitet. Sie lässt sich insbesondere in einen Wärmestrom $Q_{30}$ im Gleitring 2 und Wärmeströme $Q_{10}$, $Q_{20}$ im Gegenring 3 aufteilen. Der Wärmestrom $Q_{30}$ im Gleitring 2 erfolgt zwischen der Fläche $A_0$ des Gleitrings 2 im Dichtspalt 4 und der Oberfläche $A_3$ des Gleitrings 2, die mit dem Fördermedium F in Kontakt steht. Demgegenüber steht der Gegenring 3 nicht nur über eine Oberfläche $A_1$ mit dem Fördermedium F in Kontakt, sondern auch mit einer Oberfläche $A_2$ mit der Atmosphäre. Daraus resultieren dann im Wesentlichen zwei zu betrachtende Wärmeströme $Q_{20}$, $Q_{30}$ weg aus dem Dichtspalt 4, bzw. von der Oberfläche $A_0$ im Dichtspalt 4 hin zu den beiden Flächen $A_1$ und $A_2$. Weil der Wärmeübergang auf das Fördermedium F wesentlich stärker ausfällt als an die Atmosphäre (typischerweise Luft) kommt es zusätzlich zu einem Wärmestrom $Q_{12}$ zwischen den Oberflächen $A_1$ und $A_2$. In guter Näherung entspricht die Reibleistung L der Summe der Wärmeströme $Q_{10} + Q_{20} + Q_{30}$.

Die Pumpe 50 nach Fig. 1 verfügt zusätzlich über einen Softsensor 20 mit einer Datenschnittstelle 21. Die Pumpe 50 nach Fig. 2 kann ebenfalls hiermit ausgestattet sein, was aber nicht gezeigt ist. Der Softsensor 20 der Fig. 1 dient dem Schätzen der Reibleistung L der Gleitringdichtung 1 mit Hilfe eines Auswertemodells. Über die Datenschnittstelle 21 erhält der Softsensor 20 Datensignale $S_n$, $S_{T1}$, $S_{T2}$.

Eines der Datensignale $S_n$ beschreibt eine Drehzahl n des Gleitrings 2, indem mit einem Drehzahlsensor als Drehzahlgeber 55 die Drehzahl n der Pumpenwelle 51 erfasst wird. Alternativ kann man die Drehzahl n auch direkt als Datensignal $S_n$ von einer Motorsteuerung als Drehzahlgeber 55 bereitstellen, bspw. von einer Motorsteuerung eines Synchronmotors der Pumpe 50.

Ein zweites der Datensignale $S_{T1}$ beschreibt eine Gegenringtemperatur T1 des Gegenrings 3 an einer Messstelle eines ersten Temperatursensors 53, die im Bereich der insbesondere mit der Atmosphäre in Kontakt stehenden Fläche $A_2$ liegt.

Ein drittes der Datensignale $S_{T2}$ beschreibt eine Mediumstemperatur T2 des Fördermediums F im Inneren der Pumpe 50, insbesondere auch auf der zum Gleitring 2 weisenden Seite der Gleitringdichtung 1 und außerhalb des Dichtspaltes 4. Bei der Schätzung der Reibleistung L mit dem Softsensor 20 dient diese Mediumstemperatur T2 als Grenzflächentemperatur der Flächen $A_1$, $A_3$, also insbesondere derjenigen Flächen, die in Kontakt mit dem Fördermedium F stehen.

In der schematischen Ansicht der Fig. 1 sind die Spaltmaße des Dichtspaltes 4 sowie zwischen Gleitring 2 und Pumpenwelle 51 und Gegenring 3 und Pumpenwelle 51 deutlich größer dargestellt, als es in der Realität der Fall ist. Eine Zirkulation von Fördermedium F in diese Spaltmaße hinein und mit signifikantem Wärmetransfer aus dem Dichtspalt 4 heraus ist typischerweise vernachlässigbar. Auch Wärmeströme über die Spaltmaße auf die Pumpenwelle 51 oder zurück ins Fördermedium F können bei der Schätzung daher vernachlässigt werden. Bei Bedarf kann man diese jedoch auch in die Schätzung einbeziehen, um bspw. die Schätzgüte zu erhöhen, was jedoch die Komplexität der Schätzung bzw. des Auswertemodells deutlich erhöht. Ähnliches gilt für thermische Abflüsse über die Feder oder vom Gegenring 3 auf den Gegenringsitz 52.

Die Datensignale $S_n$, $S_{T1}$, $S_{T2}$ dienen jeweils als Eingangsgröße des Softsensors 20, der eine Auswerteeinrichtung 22 zur Schätzung der Reibleistung L durch Auswertung der Datensignale $S_n$, $S_{T1}$, $S_{T2}$ aufweist. Dafür weist das Auswertemodell ein Wärmestrommodell M3 auf, mit dem basierend auf einer Temperaturdifferenz zwischen der Ringtemperatur T1 und der Mediumstemperatur T2 die Wärmeströme $Q_{10}$, $Q_{20}$, $Q_{30}$, $Q_{12}$ in der Gleitringdichtung 1 beschrieben werden. Das Auswertemodell ist dazu ausgestaltet, über diese Wärmeströme $Q_{10}$, $Q_{20}$, $Q_{30}$, $Q_{12}$ auf die Reibleistung L zu schließen. Das Wärmestrommodell M3 beschreibt die aktuellen (quasistatischen) Wärmeströme $Q_{10}$, $Q_{20}$, $Q_{12}$ zwischen den Oberflächen $A_0$, $A_1$, $A_2$ des Gegenrings 3 basierend auf der Mediumstemperatur T2 als Grenzflächentemperatur der mit dem Fördermedium F in Kontakt stehenden Oberfläche $A_1$ des Gegenrings 3, der Ringtemperatur T1 als Grenzflächentemperatur der mit der Umgebung oder Atmosphäre in Kontakt stehenden Oberfläche $A_2$ des Gegenrings 3, und der über die im Dichtspalt 4 liegende Fläche $A_0$ eingebrachte und zu schätzende Reibleistung L. Außerdem beschreibt das Wärmestrommodell M3 den Wärmestrom $Q_{30}$ zwischen der mit dem Fördermedium F in Kontakt stehenden Oberfläche $A_3$ des Gleitrings 2 einerseits und der über die im Dichtspalt 4 liegende Fläche $A_0$ eingebrachte und zu schätzende Reibleistung L. Die Reibleistung L teilt sich also in einen Wärmeleistungsanteil in Richtung Gleitring 2 und einen Wärmeleistungsanteil in Richtung Gegenring 3 auf. Dabei hängt die Höhe der Wärmeleistungsanteile nicht nur von der Größe der Fläche $A_0$ ab, sondern vor allem auch davon, wie schnell die Wärme wieder über die Flächen $A_1$ und $A_3$ (optional auch über die Fläche $A_2$) abgegeben wird. Einflussgrößen sind hier, Material, Materialstärke, Bauteilgeometrie, Umspülung mit Fördermedium F und auch die Art des Fördermediums F.

Vereinfacht beschrieben lässt sich bspw. zunächst der Wärmestrom $Q_{12}$ zwischen der Fläche $A_2$ und der Fläche $A_1$ aufgrund des Temperaturgefälles zwischen Ringtemperatur T1 Fluidtemperatur T2 bestimmen, wobei die Energie dieses Wärmestroms $Q_{12}$ zunächst aus dem Dichtspalt 4 mit dem Wärmestrom $Q_{20}$ zu der Messstelle bei Fläche $A_2$ gelangt. Bei flüssigem Fördermedium F kann der Wärmestrom $Q_{12}$ als gleich groß wie Wärmestrom $Q_{20}$ angenommen werden. Hinzu kommt der unmittelbare Wärmestrom $Q_{10}$ aus dem Dichtspalt 4 hin zur Fläche $A_i$, der von der Konstruktion des Gegenrings 3 abhängen. Die Summe der Wärmeströme $Q_{10}$ und $Q_{20}$ entspricht dem Anteil der Reibleistung L, die über den Gegenring 3 vom Dichtspalt 4 weggeleitet wird. Bei dieser Wärmestrombetrachtung wird auch die Temperatur im Dichtspalt 4 ermittelt, sodass hierüber wiederum der Wärmestrom $Q_{30}$ ermittelbar ist, der vom Dichtspalt 4 über den Gleitring 2 an das Fördermedium F fließt.

Weil sich bei dieser Betrachtung die Bauteiltemperatur über dem Querschnitt ändert und lokal deutlich unterscheidet, weist das Auswertemodell vorzugsweise zusätzlich ein Wärmeleitmodell M1 zur Beschreibung eines Temperaturfeldes in der Gleitringdichtung 1, und ein Wärmeübergangsmodell M2 zur Beschreibung von Wärmeübergangsvorgängen von der Gleitringdichtung 1 weg, insbesondere über die Flächen $A_1$, $A_3$ auf das Fördermedium F und optional über die Fläche $A_2$ auf die sonstige Umgebung, nämlich die Atmosphäre, auf. In Kenntnis der aktuellen lokalen Temperaturen in der Gleitringdichtung 1 lassen sich die aktuellen Wärmeübergänge und Wärmeströme präzise bestimmen.

Das Auswertemodell bezieht die Geometrie des Gegenrings 3 und den oder die Wärmeleitwerte der Materialien, aus denen der Gegenring 3 ausgebildet ist, ein. Außerdem werden die Geometrie des Gleitrings 2 und der oder die Wärmeleitwerte der Materialien, aus denen der Gleitring 2 ausgebildet ist, einbezogen. Optional lassen sich geometrische Veränderungen durch Verschleiß mit einbeziehen, wozu dann vorzugsweise über die geschätzte Reibleistung L über der Betriebszeit auf den Verschleißzustand und damit die Kontur der Gleitringdichtung 1 zu schließen ist.

Die Auswerteeinrichtung 22 ist dazu ausgestaltet, mit Hilfe des Auswertemodells und den Datensignalen $S_n$, $S_{T1}$, $S_{T2}$ die über die Grenzflächen $A_0$ im Dichtspalt 4 in den Gleitring 2 und den Gegenring 3 eingebrachten Wärmeleistungen sowie hierauf gestützt die Reibleistung L als Ganzes zu schätzen.

Hierzu ist das Wärmestrommodell M3 dazu ausgestaltet, das Temperaturfeld nach dem Wärmeleitmodell M1 und die Wärmeübergänge nach dem Wärmeübergangsmodell M2 als Eingangsgrößen einzubeziehen. Dabei beschreibt das Temperaturfeld die lokalen Temperaturen in der Gleitringdichtung 1. Das Temperaturfeld löst die reduzierte Betrachtung von wenigen Flächenbereichen höher auf, weil es die Temperaturverteilung im gesamten Gleitring 2 und Gegenring 3 beschreibt. Insbesondere profitiert auch die Güte des Wärmeübergangsmodells M2 von der höher aufgelösten Temperaturverteilung innerhalb des Gleitrings 2 und Gegenrings 3.

Mit Ausnahme der Temperatur $T_0$ im Dichtspalt 4 an der Grenzfläche $A_0$ sind alle für die Schätzung wichtigen Oberflächentemperaturen bekannt. Ein Ansatz zur Berechnung der Temperatur $T_0$ der Fläche $A_0$ im Dichtspalt 4 kann in der Methode der Formfaktoren liegen. Bei dieser wird von einem stationären thermischen Zustand ausgegangen. Die Formfaktoren $a_{12}$ und $a_{20}$ berücksichtigen Größen des Temperaturfeldes aus dem Wärmeleitmodell M1 und der Wärmeübertragung aus dem Wärmeübergangsmodell M2.

Die Formfaktoren $a_{ji}$ beschreiben den Wärmedurchgang von der Stelle j zur Stelle i, insbesondere zwischen den Flächen $A_0$, $A_1$, $A_2$, $A_3$. Sie beinhalten Informationen des Wärmeübergangs in Form des Wärmeübergangskoeffizienten $\alpha$ (geschätzt durch das Wärmeübergangsmodell M2), den am Wärmedurchgang beteiligten Flächen A (beinhaltet im Wärmeleitmodell M1) und den Durchgangseffizienzen $E_{ji}$ (geschätzt durch das Wärmeleitmodell M1):

$$a_{ji} = \alpha\, A\, E_{ji}$$

Die Temperatur $T_0$ im Dichtspalt 4 kann wie folgt berechnet werden:

$$T0 = \frac{a12}{a20}(T1 - T2) + T1$$

Das Wärmestrommodell M3 kann basierend auf den Formfaktoren und der so bestimmten Temperatur $T_0$ im Dichtspalt 4 die Wärmeströme in Richtung Gleitring 2 und Gegenring 3 berechnen, insbesondere wie folgt:

$$L = Q10 + Q20 + Q30 = \begin{bmatrix}(a10 + a20 + a30) & -(a10 + a30) & -a20\end{bmatrix}\begin{bmatrix}T0 \\ T2 \\ T1\end{bmatrix}$$

Der Softsensor 20 gibt schließlich über die Datenschnittstelle 21 ein Datensignal zur geschätzten Reibleistung L aus.

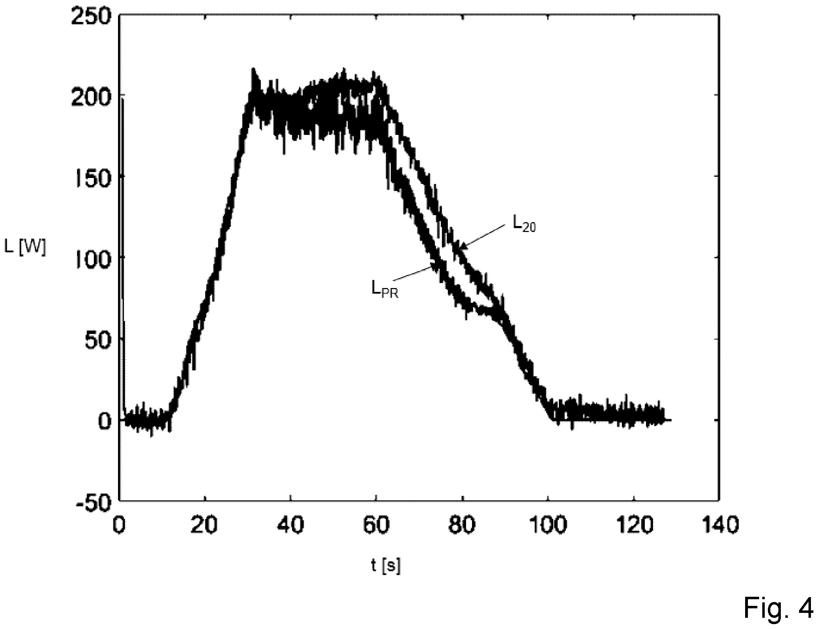

**Fig. 4** zeigt ein Diagramm mit zwei Vergleichsgraphen der Reibleistung L (in Watt) über der Zeit t (in Sekunden). Zum einen ist die Reibleistung $L_{PR}$ durch eine umfassende Prüfstanderfassung erfasst worden, und zum anderen ist die Reibleistung $L_{20}$ über die Schätzung des Softsensors 20 erfolgt. Bei der Prüfstanderfassung wurde die Reibleistung $L_{PR}$ der Gleitringdichtung 1 über eine Messung mit einer Drehmomentenmesswelle bestimmt. Anhand der Vergleichsgraphen ist ersichtlich, dass der Softsensor 20 mit der Reibleistung $L_{20}$ die mit dem Prüfstand gemessene Reibleistung $L_{PR}$ qualitativ wiedergibt. Es zeigt sich, dass der Softsensor 20 eine gute Schätzung der Reibleistung L erreichen kann. Quantitativ wurden mit den bisher ausgestalteten Modellen M1, M2, M3 und den evaluierten Formfaktoren $a_{jji}$ mittlere Schätzgüten von 85 % erzielt. Dabei reagiert die geschätzte Reibleistung $L_{20}$ recht sensitiv auf die Größen zur Beschreibung der Wärmeübergänge innerhalb der Formfaktoren $a_{ji}$. Durch eine größere Anzahl an Messreihen könnten die Wärmeübergangszustände an der Gleitringdichtung 1 noch präziser erfasst und in den Formfaktoren $a_{ji}$ berücksichtigt werden. Dabei ist damit zu rechnen, dass Schätzgüten von >90 % erzielbar sind. Bereits eine 85 % Schätzgüte der Reibleistung L reicht aber völlig, um kritische aktuelle Betriebszustände zu identifizieren, z.B. einen Trockenlauf. Bei einer fortdauernden Betrachtung der Reibleistung L über der Zeit ist die Abweichung von dem geschätzten Verschleiß zum tatsächlichen Verschleiß ohnehin geringer anzunehmen, weil sich Über- und Unterschätzungen der Reibleistung L teilweise ausgleichen. Größere Abweichungen des tatsächlichen Verschleißes vom geschätzten Verschleiß als aufgrund der Schätzung der Reibleistung L können beispielsweise durch Verunreinigungen des Fördermediums F o.dgl. resultieren. In Anbetracht dessen kann man mit der Schätzgüte der Reibleistung L von 85 % ebenfalls gut umgehen. Ein Sicherheitspolster hinsichtlich des Verschleißes gegen Dichtungsversagen ist ohnehin erforderlich.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

| | | | |
|---|---|---|---|
| 1 | Gleitringdichtung | F | Fördermedium |
| 2 | Gleitring | $F_F$ | Federkraft |
| 3 | Gegenring | $F_P$ | sonstige Kraft |
| 4 | Dichtspalt | $F_{SP}$ | Spaltkraft |
| | | $h_{SP}$ | Spalthöhe |
| 20 | Softsensor | L | Reibleistung |
| 21 | Datenschnittstelle | $L_{20}$ | Schätzreibleistung gemäß Softsensor |
| 22 | Auswerteeinrichtung | | |

(fortgesetzt)

| | | | |
|---|---|---|---|
| | | Lpr | Vergleichsreibleistung gemäß Prüfstand |
| 50 | Pumpe | | |
| 51 | Pumpenwelle | M1 | Wärmeleitmodell |
| 52 | Gegenringsitz | M2 | Wärmeübergangsmodell |
| 53 | erster Temperatursensor (erfasst Ringtemperatur) | M3 | Wärmestrommodell |
| | | n | Drehzahl des Gleitrings |
| 54 | zweiter Temperatursensor (erfasst Mediumstemperatur) | $S_n$ | Datensignal zur Drehzahl n |
| | | $S_{T1}$ | Datensignal zur Ringtemperatur T1 |
| 55 | Drehzahlgeber | $S_{T2}$ | Datensignal zur Mediumstemperatur T2 |
| 56 | erste Nebendichtung | | |
| 57 | zweite Nebendichtung | t | Zeit |
| 58 | Pumpengehäusebauteil | T1 | Ringtemperatur |
| | | T2 | Mediumstemperatur |
| A | Lagerachse | | |

**Patentansprüche**

1. **Softsensor** (20), insbesondere zur Bestimmung einer Reibleistung (L) einer Gleitringdichtung (1) durch Schätzen,

   - mit einer Datenschnittstelle (21), die zum Erhalt von Datensignalen ($S_n$, $S_{T1}$, $S_{T2}$) zu

      a) einer Ringtemperatur (T1) eines Gleitrings (2) oder Gegenrings (3) der Gleitringdichtung (1) und
      b) einer Mediumstemperatur (T2) des Fördermediums (F) auf der zum Gleitring (2) weisenden Seite der Gleitringdichtung (1) und außerhalb eines Dichtspaltes (4) zwischen dem Gleitring (2) und dem Gegenring (3),

   jeweils als Eingangsgröße des Softsensors (20) ausgebildet ist, und
   - mit einer Auswerteeinrichtung (22), die zur Schätzung der Reibleistung (L) durch Auswertung der Datensignale ($S_n$, $S_{T1}$, $S_{T2}$) ausgebildet ist, wozu die Auswerteeinrichtung (22) ein Auswertemodell umfassend ein Wärmestrommodell (M3) aufweist, wobei das Wärmestrommodell (M3) dazu ausgestaltet ist, basierend auf einer Temperaturdifferenz zwischen der Ringtemperatur (T1) und der Mediumstemperatur (T2) Wärmeströme in der Gleitringdichtung (1) zu beschreiben und das Auswertemodell dazu ausgestaltet ist, über die Wärmeströme auf die Reibleistung (L) zu schließen.

2. Softsensor (20) gemäß Anspruch 1, **dadurch gekennzeichnet, dass** die Auswerteeinrichtung (22) dazu ausgestaltet ist, die Schätzung der Reibleistung (L) über eine im Dichtspalt (4) in die Gleitringdichtung (1) eingeleitete, geschätzte Wärmeleistung gemäß dem Wärmestrommodell (M3) vorzunehmen.

3. Softsensor (20) gemäß einem der Ansprüche 1 oder 2, **dadurch gekennzeichnet, dass** das Auswertemodell die Geometrie des Gegenrings (3) und den oder die Wärmeleitwerte der Materialien, aus denen der Gegenring (3) ausgebildet ist, einbezieht.

4. Softsensor (20) gemäß einem der vorhergehenden Ansprüche, **dadurch gekennzeichnet, dass** das Auswertemodell die Geometrie des Gleitrings (2) und den oder die Wärmeleitwerte der Materialien, aus denen der Gleitring (2) ausgebildet ist, einbezieht.

5. Softsensor (20) gemäß einem der vorhergehenden Ansprüche, **dadurch gekennzeichnet, dass** das Wärmestrommodell (M3) dazu ausgestaltet ist, Wärmeströme zwischen Oberflächen desjenigen aus Gleitring (2) und Gegenring (3) zu bestimmen, an dem die Ringtemperatur (T1) bestimmt wird, nämlich basierend auf der Mediumstemperatur (T2) als Grenzflächentemperatur der mit dem Fördermedium (F) in Kontakt stehenden Oberflächen einerseits, insbesondere exklusive der Oberfläche im Dichtspalt (4), und den anderen der Oberflächen andererseits, wobei die Auswerteeinrichtung (22) dazu ausgestaltet ist, aus den Wärmeströmen die über die Oberfläche im Dichtspalt (4) in denjenigen aus Gleitring (2) und Gegenring (3), an dem die Ringtemperatur (T1) bestimmt wird, eingebrachte Wärmeleistung zu schätzen, und basierend auf dieser eingebrachten Wärmeleistung die Reibleistung zu schätzen.

6. Softsensor (20) gemäß einem der vorhergehenden Ansprüche, **dadurch gekennzeichnet, dass** das Wärmestrommodell (M3) dazu ausgestaltet ist, Wärmeströme zwischen Oberflächen desjenigen aus Gleitring (2) und Gegenring (3) zu bestimmen, an dem die Ringtemperatur (T1) nicht bestimmt wird, nämlich basierend auf der Mediumstemperatur (T2) als Grenzflächentemperatur der mit dem Fördermedium (F) in Kontakt stehenden Oberflächen einerseits, insbesondere exklusive der Oberfläche im Dichtspalt (4), und den anderen der Oberflächen andererseits,
wobei die Auswerteeinrichtung (22) dazu ausgestaltet ist, aus den Wärmeströmen die über die Oberfläche im Dichtspalt (4) in denjenigen aus Gleitring (2) und Gegenring (3), an dem die Ringtemperatur (T1) nicht bestimmt wird, eingebrachte Wärmeleistung zu schätzen, und basierend auf dieser eingebrachten Wärmeleistung die Reibleistung zu schätzen.

7. Softsensor (20) gemäß einem der vorhergehenden Ansprüche, **dadurch gekennzeichnet, dass** das Auswertemodell ein Wärmeübergangsmodell (M2) zur Beschreibung von Wärmeübergangsvorgängen von der Gleitringdichtung (1) weg aufweist, insbesondere auf das Fördermedium (F), auf angrenzende Bauteile wie einen Gegenringsitz (52) und/oder auf die sonstige Umgebung der Gleitringdichtung (1).

8. Softsensor (20) gemäß einem der vorhergehenden Ansprüche, **dadurch gekennzeichnet, dass** die Datenschnittstelle (21) zum Erhalt eines Datensignals ($S_n$) zu einer Drehzahl (n) des Gleitrings (2) der Gleitringdichtung (1) als Eingangsgröße des Softsensors (20) ausgebildet ist.

9. Softsensor (20) gemäß Anspruch 8 in Kombination mit Anspruch 7, **dadurch gekennzeichnet, dass** zumindest das Wärmeübergangsmodell (M2) dazu ausgestaltet ist, das Datensignal ($S_n$) zu der Drehzahl (n) des Gleitrings (2) als Eingangsgröße einzubeziehen.

10. Softsensor (20) gemäß einem der vorhergehenden Ansprüche, **dadurch gekennzeichnet, dass** das Auswertemodell ein Wärmeleitmodell (M1) zur Beschreibung eines Temperaturfeldes in der Gleitringdichtung (1) aufweist.

11. **Pumpe** (50) mit einer Gleitringdichtung (1) und einem Softsensor (20) nach einem der vorhergehenden Ansprüche,

   - wobei die Gleitringdichtung (1) einen rotierend um eine Lagerachse (A) angeordneten Gleitring (2) und einen drehfest angeordneten Gegenring (3), der über einen Dichtspalt (4) mit dem Gleitring (2) korrespondiert, aufweist,
   - wobei der Gleitring (2) auf einer Pumpenwelle (51) und der Gegenring (3) in einem Gegenringsitz (52) angeordnet ist,
   - mit einem ersten Temperatursensor (53), der zur Erfassung der Ringtemperatur (T1) ausgebildet und mit der Datenschnittstelle (21) kommunizierend verbunden ist, und
   - mit einem zweiten Temperatursensor (54), der zur Erfassung der Mediumstemperatur (T2) des Fördermediums (F) auf der zum Gleitring (2) weisenden Seite der Gleitringdichtung (1) und außerhalb des Dichtspaltes (4) ausgebildet und mit der Datenschnittstelle (21) kommunizierend verbunden ist.

12. Pumpe (50) gemäß Anspruch 11, **dadurch gekennzeichnet, dass** der Gleitring (2) entlang der Lagerachse (A) axial verschiebbar gelagert und mit einer Federkraft axial in Richtung des Gegenrings (3) belastet ist.

13. Pumpe (50) gemäß einem der Ansprüche 11 oder 12, **dadurch gekennzeichnet, dass** diese einen Drehzahlgeber (55) aufweist, der zur Übertragung des Datensignals ($S_n$) zur Drehzahl (n) der Pumpenwelle (51) oder des Gleitrings (2) kommunizierend mit der Datenschnittstelle (21) verbunden ist.

14. **Computer-implementiertes Verfahren,** insbesondere zur Bestimmung einer Reibleistung (L) einer Gleitringdichtung (1) durch Schätzen, umfassend zumindest die folgenden Schritte:

   - Ermitteln:

      a) einer Ringtemperatur (T1) eines Gleitrings (2) oder Gegenrings (3) der Gleitringdichtung (1); und
      b) einer Mediumstemperatur (T2) des Fördermediums (F) auf einer zum Gleitring (2) weisenden Seite der Gleitringdichtung (1) und außerhalb eines Dichtspaltes (4) zwischen dem Gleitring (2) und dem Gegenring (3);

- Ausführen eines Auswertemodells umfassend ein Wärmestrommodell (M3), wobei das Wärmestrommodell (M3) dazu ausgestaltet ist, basierend auf einer Temperaturdifferenz zwischen der Ringtemperatur (T1) und der Mediumstemperatur (T2) Wärmeströme in der Gleitringdichtung (1) zu beschreiben und das Auswertemodell dazu ausgestaltet ist, über die Wärmeströme auf die Reibleistung (L) zu schließen,
- Bereitstellen der Reibleistung (L).

15. Computer-implementiertes Verfahren nach Anspruch 14, **dadurch gekennzeichnet, dass** das Ausführen des Auswertemodells

    - ein Wärmeübergangsmodell (M2) zur Beschreibung von Wärmeübergangsvorgängen zwischen der Gleitringdichtung (1) und zumindest dem umgebenden Fördermedium (F); und/oder
    - ein Wärmeleitmodell (M1) zur Beschreibung eines Temperaturfelds in der Gleitringdichtung (1);

umfasst.

16. Computer-implementiertes Verfahren nach einem der Ansprüche 14 oder 15, wobei die Gleitringdichtung (1) einen rotierend um eine Lagerachse (A) angeordneten Gleitring (2) und einen drehfest angeordneten Gegenring (3), der über einen Dichtspalt (4) mit dem Gleitring (2) korrespondiert, aufweist, und mit einem Softsensor (20), der zur Ausführung des Auswertemodells ausgestaltet ist, und umfassend die folgenden Schritte:

    - Übermitteln der Ringtemperatur (T1) und der Mediumstemperatur (T2) als eingehende Datensignale ($S_n$, $S_{T1}$, $S_{T2}$) an den Softsensor (20);
    - Ausführen des Auswertemodells mit dem Softsensor (20) basierend auf den eingehenden Datensignalen ($S_n$, $S_{T1}$, $S_{T2}$) mit Hilfe des Auswertemodells.

Fig. 1

Fig. 2

EP 4 509 813 A1

Fig. 3

Fig. 4

Europäisches
Patentamt

European
Patent Office

Office européen
des brevets

# EUROPÄISCHER RECHERCHENBERICHT

**Nummer der Anmeldung**

EP 24 18 9222

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 691 276 A (MILLER ALAN L [US] ET AL) 1. September 1987 (1987-09-01) * Abbildung 1 * * Anspruch 4 * * Spalte 7, Zeilen 38-39 * * Spalte 11, Zeilen 21-27 * ----- | 1-16 | INV. G01M13/005 F16J15/3296 G01N19/02 F16J15/34 |
| A | Mayer E.: "Mechanical Seals", , 31. Dezember 1982 (1982-12-31), XP093234317, ISBN: 978-0-408-00307-0 Gefunden im Internet: URL:https://www.sciencedirect.com/book/978 0408003070/mechanical-seals * Absätze [0150] - [0155] * ----- | 1-16 | |
| A | CN 101 769 379 A (UNIV NANJING FORESTRY) 7. Juli 2010 (2010-07-07) * Absätze [0025] - [0026] * ----- | 1-16 | RECHERCHIERTE SACHGEBIETE (IPC) G01M F16J G01N |

Der vorliegende Recherchenbericht wurde für alle Patentansprüche erstellt

| Recherchenort | Abschlußdatum der Recherche | Prüfer |
|---|---|---|
| Den Haag | 13. Dezember 2024 | Kaiser, Jean-Luc |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 18 9222

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-12-2024

| Im Recherchenbericht angeführtes Patentdokument | Datum der Veröffentlichung | Mitglied(er) der Patentfamilie | | Datum der Veröffentlichung |
|---|---|---|---|---|
| US 4691276 A | 01-09-1987 | AR | 241549 A1 | 31-08-1992 |
| | | AU | 580191 B2 | 05-01-1989 |
| | | CA | 1282476 C | 02-04-1991 |
| | | CN | 86106617 A | 10-06-1987 |
| | | EP | 0220531 A2 | 06-05-1987 |
| | | ES | 2016789 A4 | 01-12-1990 |
| | | FI | 864252 A | 22-04-1987 |
| | | IL | 80053 A | 15-03-1993 |
| | | IN | 167664 B | 01-12-1990 |
| | | JP | H0472108 B2 | 17-11-1992 |
| | | JP | S62101974 A | 12-05-1987 |
| | | KR | 870004263 A | 08-05-1987 |
| | | US | 4691276 A | 01-09-1987 |
| | | ZA | 867396 B | 27-05-1987 |
| CN 101769379 A | 07-07-2010 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0886088 A2
- WO 2010142367 A1
- EP 2440816 A1
- EP 4008934 A2
- DE 102015226311 A1
- WO 2008148496 A1